# EUROPEAN PATENT SPECIFICATION

(11) **EP 2 874 133 B1**
(45) Date of publication and mention of the grant of the patent: **07.09.2016**
(21) Application number: 14188558.2
(22) Date of filing: 10.10.2014
(51) Int. Cl.: G08G 5/00

(54) **Aircraft systems and methods for reducing and detecting read-back and hear-back errors**
Flugzeugsysteme und -verfahren zur Verringerung und Detektion von Readback- und Hearback-Fehlern
Systèmes et procédés d'aéronef de réduction et de détection d'erreurs de réécoute et de relecture

(30) Priority: 14.11.2013 US 201314080187
(43) Date of publication of application: 20.05.2015
(73) Proprietor: Honeywell International Inc., Morris Plains, NJ 07950 (US)
(72) Inventor: Mohideen, Mohammed Ibrahim, Morristown, NJ New Jersey 07962-2245 (US)
(74) Representative: Houghton, Mark Phillip

(56) References cited:
- EP-A1- 2 674 926
- US-A1- 2007 241 936
- US-B1- 7 809 405

## Description

### TECHNICAL FIELD

The present invention generally relates to avionic systems and more particularly relates to aircraft systems and methods for reducing and detecting read-back and hear-back

### BACKGROUND

Air traffic control currently depends primarily on voice communications between air traffic control (ATC) and a pilot or crewmember. In conventional cockpit communication practice, the transmitting station (e.g., ATC and more particularly, the air traffic controller (ATCO)) may communicate a request for pilot action. The receiving station (e.g., the aircraft and more particularly, a pilot or crewmember) may acknowledge the request by reading back the information it has received and using a procedure word (e.g., "Wilco" (meaning "Will Comply"), "Roger," or "Affirmative"). "Procedure words" are words or phrases used to facilitate communication by conveying information in a condensed standard form. The aircraft also includes its call sign in the read-back. For example, if an ATCO requests that the pilot "turn right zero-nine-zero", the pilot acknowledges the request with "(call sign), Turn Right zero-nine-zero, Wilco" or the like so that the ATCO knows the correct aircraft has acknowledged the request, that the request was correctly understood, and what the pilot intends to do. Stringent read-back requirements have been introduced in the interest of flight safety. Strict adherence to read-back requirements ensures that the request for pilot action has been received and understood correctly by the correct aircraft. An incomplete and/or incorrect pilot read-back is a read-back error. The read-back error may relate to the call back sign and/or the information read back being incomplete and/or incorrect.

When the request is "read-back" by the receiving station, the transmitting station is to ensure the read-back is complete and correct. Listening for a complete and correct read-back is called "hear-back." The read-back should be very carefully monitored with the transmitting station replying to the read-back by indicating that the read-back was correct or identifying missing or incorrect information (i.e., that there is a read-back error), as respectively exemplified in the following dialogs between a transmitting station and a receiving station:

### DIALOG (1): CORRECT READ-BACK

EG93: "Victor Juliet Five-Zero, Victor Juliet Five-Zero, this is Echo Golf Niner-Three. Request rendezvous at 51 degrees 37.0N, 001 degrees 49.5W. Read-back for check. Over." VJ50: "Echo Golf Niner-Three. Echo Golf Niner-Three, this is Victor Juliet Five-Zero. I read-back: five one degrees three seven decimal zero North, zero zero one degrees four niner decimal five West. Over."

EG93: "Victor Juliet Five-Zero, Victor Juliet Five-Zero, this is Echo Golf Niner-Three. Correct. Out. "

### DIALOG (2): READ-BACK ERROR

ATCO: "Piper Three Five X-ray, turn right heading 040, descend and maintain 3000." Pilot: "Right heading 030, descending to 4000, Three Five X-ray."
ATCO: "Negative! Piper Three Five X-ray, turn right *heading 040,* descend and maintain *3000."*

Unfortunately, it is not possible for a person to understood two things at once. In attempting to do so, the brain processes a single audible input at a time and switches between inputs many times per minute, filling in the "gaps" from each audible input with what is believed to be the missing data. When simultaneously listening to RTF, telephone, and direct face to face exchanges, the perception that a complete or correct read-back has been received may not be reliable. For this reason, an ATCO should not allow himself/herself to be interrupted when listening to a read-back (i.e., during hear-back). The underlying problem for air traffic controllers may be the sheer volume of traffic, the rush of departures/arrivals; the behind-the-scenes tasks of land-lines, phones and hand-offs; the congested frequencies with "stepped on" transmissions; the working of several discrete frequencies; and, at times, the time and attention-consuming repeats of call-ups or clearances to individual aircraft. These activities, together with human fallibilities of inexperience, hearing difficulties, memory lapse, language barriers, distractions, communication problems, ineffective monitoring, data use error, non-compliance with Standard Operating Procedures (SOP), fatigue, etc. set the stage for hear-back errors. The failure to hear, failure to reply, or misinterpretation of a pilot read-back results in a hear-back error. Until a consensus is reached between the transmitting station and the receiving station, the iterative read-back, hear-back, and reply (each constituting a "message") of a dialog continue, delaying throughput of the airport air traffic. The consensus is reached when there is no material difference between the request for pilot action and the read-back.

Accordingly, it is desirable to provide aircraft systems and methods for reducing and detecting read-back and hear-back errors, thereby resulting in increased flight safety and efficiency through more effective communications. It is also desirable to reduce the number of iterations in a dialog, thereby maintaining throughput of airport air traffic. Furthermore, other desirable features and characteristics of the methods and systems will become apparent from the subsequent detailed description and the appended claims, taken in conjunction with the accompanying drawings and the preceding background.

US7809405B1 discloses a method for reducing aviation voice communication confusion. The method includes receiving a first and second voice radio communications in a processing system. The first voice radio communication is compared to the second voice radio communication using speech recognition functionality. The method further includes providing an alert when the compared first voice radio communication and second voice radio communication are at least substantially inconsistent in content.

### BRIEF SUMMARY

The present invention provides a method for reducing and detecting read-back and hear-back errors in an aircraft, according to claim 1 of the appended claims.

The invention further provides a system for reducing and detecting read-back and hear-back errors, according to claim 10 of the appended claims.

Methods are provided for reducing and detecting read-back and hear-back errors. In accordance with one exemplary embodiment, the method comprises obtaining contextual data about a current context of the aircraft. A dialog comprising an inbound voice communication and an outbound voice communication is transcribed into text using the contextual information. The text of the inbound voice communication is compared with the text of the outbound voice communication to determine if a discrepancy exists between the respective texts. A discrepancy alert is outputted if the discrepancy is determined to exist, thereby indicating a read-back error.

Methods are provided for reducing read-back and hear-back errors in accordance with yet another exemplary embodiment of the present invention. The method comprises obtaining contextual data about a current context of the aircraft. An inbound voice communication from a transmitting station is transcribed into text using the contextual data to validate the transcription. The transcribed text of the inbound voice communication is displayed to a receiving station. An outbound voice communication from the receiving station is transcribed into text. The outbound voice communication comprises a read-back of the inbound voice communication. The transcribed text of the outbound voice communication is displayed to the transmitting station. The transcribed text of the inbound voice communication is compared with the transcribed text of the outbound voice communication. It is determined if there is a difference between the transcribed text of the inbound and outbound voice communications indicating a read-back error. A discrepancy alert is outputted if there is a read-back error.

Systems are provided for reducing and detecting read-back and hear-back errors in accordance with yet another exemplary embodiment of the present invention. The system comprises a communication system, a flight management system, a speech transcription module, a data storage device, a processor, and a display device. The communication system is configured to support an inbound voice communication from a transmitting station relating to a request for pilot action, an outbound voice communication from a receiving station. The outbound voice communication comprises a read-back of the request for pilot action. The speech transcription module is configured to transcribe into text the inbound and outbound voice communications using contextual data to validate the transcriptions. The data storage device contains a database with stored contextual data. The processor is coupled to the speech transcription module and the data storage device to receive digital data corresponding to the transcribed text and configured, in response thereto, to compare the text of the inbound voice communication with the text of the outbound voice communication and determine if a discrepancy exists between the respective texts. A discrepancy alert is outputted if the discrepancy exists. The display device displays the transcribed texts.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a simplified functional block diagram of a computer-implemented system for reducing and detecting read-back and hear-back errors, according to an exemplary embodiment of the present invention;
FIG. 2 is a flow chart of a method for reducing and detecting read-back and hear-back errors according to another exemplary embodiment of the present invention;
FIG. 3 is a simplified schematic flow diagram of the method of FIG. 2;
FIG. 4 depicts an exemplary display screen of an exemplary display device at a receiving station with transcribed text of an inbound voice communication (i.e., a request for pilot action) from a transmitting station to aid the receiving station with a read-back, thereby reducing read-back errors, according to an exemplary embodiment of the present invention;
FIG. 5 is an exemplary display screen of an exemplary display device at a transmitting station with transcribed text of an outbound voice communication (i.e., the read-back) from the receiving station along with transcribed text of the inbound voice communication (the request for pilot action) to aid the transmitting station with a hear-back, thereby reducing and detecting hear-back errors, according to an exemplary embodiment of the present invention; and
FIG. 6 is an exemplary display screen of an exemplary display device with transcribed text of the request for pilot action, the outbound voice communication, and an inbound voice reply with the read-back errors in the transcribed text of the inbound voice reply visually highlighted by making the text bold to provide a visual discrepancy alert generated by the system of FIG. 1 according to an exemplary embodiment of the present invention.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Various embodiments are directed to methods and systems for reducing and detecting read-back and hear-back errors, thereby resulting in increased flight safety and efficiency through more effective communications. In addition, the amount of airport air traffic throughput may be increased. A request for pilot action may originate from a transmitting station (e.g., air traffic control (ATC) and more particularly, the air traffic controller (ATCO)) at a ground location. While the term "request for pilot action" is used herein, it is to be understood that any inbound voice communication from the transmitting station (that must be acknowledged in some manner by the receiving station (e.g., the aircraft and more particularly, a pilot or crewmember) in an outbound voice communication from the aircraft) is included, whether it is literally a "request", an "instruction", a "command", or the like. Similarly, the "request for pilot action" may include a "request" for other than "pilot" action. The term "read-back" refers to reading back the information it has received in the request for pilot action and the aircraft call sign. A "read-back" error refers to an incomplete read-back, an incorrect read-back, or both. With an incomplete read-back, the transmitting station may not appreciate that there may be a misunderstanding. An incomplete read-back is a read-back where some details are missing and it is related to these missing parts that an error can occur. When there is an incomplete read-back, the transmitting station believes that the communicated request for pilot action was unambiguous; the ATCO had a clear idea of his or her plan and believes that it had been delivered correctly. The information contained in the subsequent read-back, although incomplete, may be correct. A "hear-back error" refers to a failure to hear or misinterpretation of a pilot read-back. The hear-back may be incomplete, incorrect, or both incomplete and incorrect. The systems and methods according to exemplary embodiments may be utilized in aircraft, such as a helicopter or an airplane. Moreover, exemplary embodiments of the system and method may also be utilized in spacecraft, ships, submarines, and other types of vehicles, in addition to machine operation. For simplicity, embodiments are described below with reference to "aircraft".

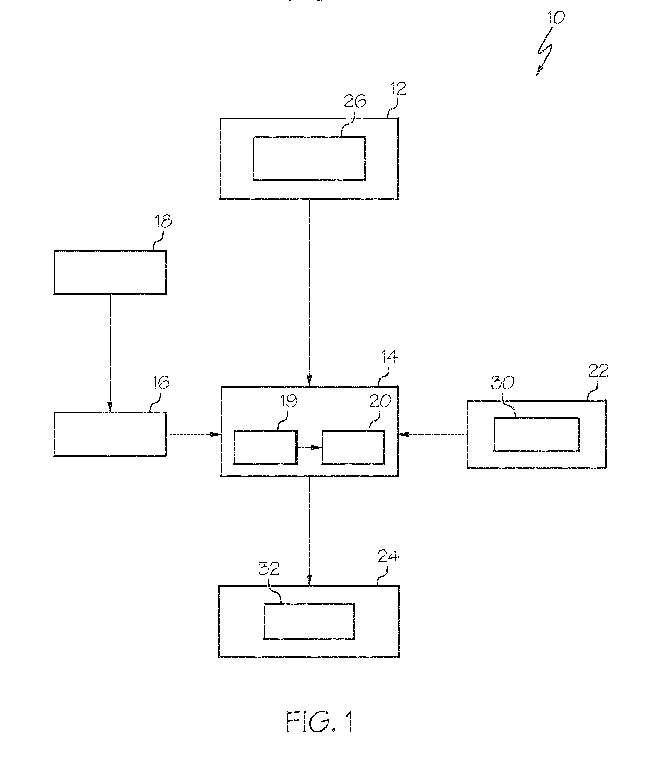

FIG. 1 is a simplified functional block diagram of a computer-implemented system for reducing and detecting read-back and hear-back errors, according to exemplary embodiments of the present invention. System 10 includes multiple components described below that may be standalone components or they may be components that are used as part of other systems and which are configured to be used as a shared resource between such other systems and system 10.

In the embodiment illustrated in FIG. 1, the system 10 includes a communication system 12, a speech transcription module 14, a flight management system 16, a user interface 18, a processor 20, a data storage device 22, and a display device 24. In other embodiments, system 10 may include either additional or fewer components. The system 10 may be arranged as a single system on a data communications bus or systems bus or in an arrangement whereby one or more of the communication system, the processor, the speech transcription module, the data storage device, the flight management system, the display device, and the user interface are separate components or subcomponents of another system located either onboard, external to an aircraft, or both. It should be understood that FIG. 1 is a simplified representation of the system 10 for purposes of explanation and ease of description, and FIG. 1 is not intended to limit the application or scope of the subject matter in any way. In practice, while not illustrated, the system 10 and/or aircraft may include either additional or fewer devices, components, and databases for providing system functions and features, as will be appreciated in the art.

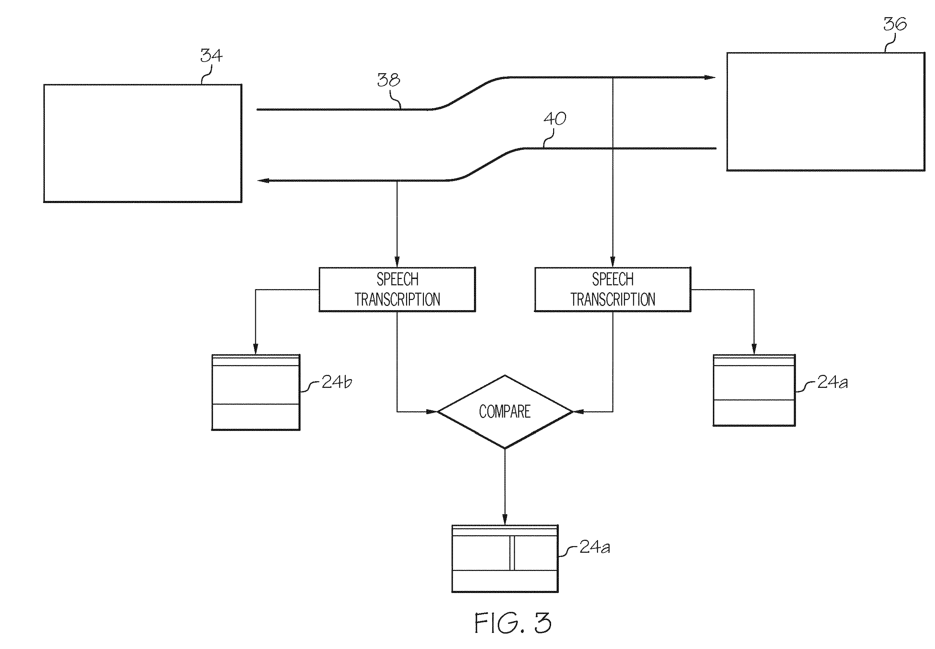

Still referring to FIG. 1 and now to FIG. 3, in an exemplary embodiment, the communication system 12 is suitably configured to support voice communications between a transmitting station 34 and a receiving station 36. As noted previously, the transmitting station may be air traffic control (ATC) and more particularly, the air traffic controller (ATCO)) at a ground location. The receiving station may be the aircraft and more particularly, a pilot or crewmember. The communication system may be realized using a radio communication system 26. The standard method of communication between ATC and the pilot is voice radio, using the radio communication system such as either VHF bands for line-of sight communication or HF bands for long-distance communication. The radio communication system in the cockpit may include, for example, a conventional speaker and microphone that may be combined in an aviation headset (not shown), a radio receiver (not shown), and a push-to-talk (PTT) switch (not shown). The radio communication system at the transmitting station is conventional. The inbound communication from the transmitting station to the receiving station is referred to herein as "inbound voice communication" (arrow 38 in FIG. 3). Inbound voice communications include an initial inbound voice communication (i.e., the request for pilot action) and an "inbound voice reply" to the read-back from the receiving station, as hereinafter described. Unless otherwise indicated, the initial inbound voice communication only will be referred to herein as the "inbound voice communication" and the inbound voice reply will be referred to as the "inbound voice reply". The voice communication from the receiving station to the transmitting station is referred to herein as an "outbound voice communication" (i.e., the read-back) (arrow 40 in FIG. 3).

The sequence of voice communications (i.e., messages) between the transmitting station and the receiving station relating to a particular transaction include, for example, the request for pilot action, acknowledgment of the request for pilot action (the read-back), and a reply to the read-back after hear-back. The request, acknowledgment, and reply sequence is termed a "dialog". There can be several sequences of messages in the dialog, each of which is closed by means of an appropriate message, usually of acknowledgement or reply. All exchanges of messages relating to a particular transaction between the transmitting station and the receiving station can be viewed as a dialog. Each dialog relates to the request for pilot action communicated in the (initial) inbound voice communication. For example, the air traffic controller (ATCO) at the transmitting station is provided with the capability to communicate level assignments, crossing constraints, lateral deviations, route changes and clearances, speed assignments, radio frequency assignments, various requests for information, etc. (each collectively referred to herein as an exemplary "request(s) for pilot action.") The receiving station is provided with the capability to verbally acknowledge the request for pilot action by reading back the aircraft call sign, the information received (that may refer, for example, to a parameter, a parameter value, or both as hereinafter described) as well as using a procedure word to indicate what he or she intends to do. As noted previously, "procedure words" are words or phrases used to facilitate communication by conveying information in a condensed standard form. Exemplary procedure words include "Wilco" (meaning "Will Comply"), "Roger", or "Affirmative." The dialog is complete when a consensus is reached between the transmitting and receiving station as to the request for pilot action and the read-back, i.e., a consensus is reached when there is no "material" difference between the read-back and the request for pilot action. The read-back does not have to be verbatim with the language used in the request for pilot action as long as the read-back of the material information is complete and correct, resulting in no material difference between the request for pilot action and the read-back. "Material" information is that information in the request for pilot action and read-back that pertains to substantive content, for example, the call sign, the parameter (e.g., heading, altitude, a runway/taxiway identifier, hold short position identifier, etc.) and the parameter value. "Material" information is distinguishable from "filler" information and other idiosyncratic elements of speech (e.g., stutters, pauses, filler words, etc.) that have no substantive content.

Referring again to FIG. 1, the speech transcription module 14 is known and generally comprises a speech input module 19 configured to produce a digital signal derived from the voice communications, and a speech processing module 20 operatively coupled to the speech input module. In some embodiments, such as depicted in FIG. 1, the speech transcription module includes a dedicated processor, a microprocessor, circuitry, or some other processing component (e.g., speech processing module 20). In other embodiments, the speech processing module may be a separate component or subcomponent of another system. The speech transcription module is configured to transcribe the inbound and outbound voice communications into text (a written or printed form) (i.e., speech-to-text conversion). For speech to text conversion, the speech transcription module is first "trained" to recognize spoken words and phrases that may be used by the transmitting and receiving stations. Such words and phrases may be a part of an aviation vocabulary and include words and phrases corresponding to the call sign (e.g., Piper Three Five X-ray), the information received (e.g., parameter, parameter value, or both) (e.g., turn right heading 040, descend and maintain 3000, right heading 030, descending to 4000, three five x-ray), and the procedure word (e.g., "wilco", "Roger", or "Affirmative"). The speech transcription module may be "trained" with standard words and phrases that are supplied by the supplier of the speech transcription module as well as the words and phrases particular to an aviation context. As hereinafter described, according to exemplary embodiments, the speech transcription module is also "trained" with words or phrases obtained from the flight management system and/or database(s) of the data storage device. The words or phrases obtained from the flight management system and/or database(s) of the data storage device are referred to herein as "contextual data". The speech transcription module may be "trained" to recognize the material words and phrases and to remove the idiosyncratic elements of speech (e.g., stutters, pauses, filler words, etc.) from the transcriptions, i.e., the speech transcription system 14 of system 10 may be configured to filter out the idiosyncratic speech elements or otherwise parse the voice communications to identify the material information or material words and phrases in the request for pilot action, the read-back, and the reply. The speech transcription module continuously "learns" the spoken words and phrases.

Poor speech habits and other problems such as heavy foreign accents and mumbling complicate the process for speech transcription recognition software that must transcribe into text unintelligible word(s) using the "learned" language. Therefore, in accordance with exemplary embodiments, the speech transcription module 14 also uses the contextual data obtained from the flight management system 16 and/or from database 30 of data storage device 22 to validate the transcription. As used herein, the term "validate" or the like refers to confirming or establishing the soundness of the transcription. As noted previously, the flight management system and/or data storage device includes contextual data about the current context of the aircraft. Such contextual data may include flight plan information such as the identity of the origination and/or destination airport for the aircraft, identity of the aircraft, flight phase, the identity of the pilot and/or controller, the identity of the pilot and/or ATCO's native language, origination/destination airport information such as runway closure status and/or the spatial relationship about airport geometry (e.g., connection between runway and taxiway), etc. The contextual data may be available, for example, in a navigational database and/or airport mapping database that is included or accessed by the flight management system. The contextual data is represented by words or phrases used to facilitate communication by conveying such information or data in an easily understood concise, standard form. For example, the transmitting station may communicate a request for pilot action relating to a taxi clearance in an inbound voice communication, such as "Quickjet 123 Runway Three Six Left, taxi via taxiway Alpha, hold short of Runway Two Seven Right". The spatial relationship between Runway 36 left and Runway 27 right may be available as contextual data in the navigational database and/or the airport mapping database (such as database 30) accessed by or included in the flight management system and/or the data storage system. The speech transcription module may use the contextual data during the speech-to-text conversion to validate the transcription, thus enabling quicker and more error free speech-to-text conversion. In the above example relating to the taxi clearance, contextual data may also include that taxiway alpha is adjacent to runway 36; therefore, no transcription error can be made while transcribing taxiway alpha as taxiway Charlie as taxiway Charlie is not connected to runway 36 at all. Thus, using the contextual data helps reduce transcription errors (i.e., validates the transcription).

The speech transcription module is configured to send a digital signal representing the text to the processor 20 as hereinafter described. The alphabet used in the transcribed text from the inbound voice communication and in the transcribed text from the outbound voice communication should be the same (hereinafter, "a target alphabet"), enabling ready comparison in a comparing step 130 of the method 100 for reducing and detecting read-back and hear-back errors, as hereinafter described. The transcription may be structured into line-by-line dialog.

Still referring to FIG. 1, the flight management system 16 is as known to one skilled in the art. The flight management system includes the flight guidance control system. The flight management system is coupled to the processor and may provide navigation data associated with the aircraft's current position and flight direction (e.g., heading, course, track, etc.) to the processor. The navigation data provided to the processor may also include information about the aircraft's airspeed, altitude, pitch, flight path, intended destination, takeoff and landing information, and other important flight information. For example, the flight management system may generate a flight plan for the aircraft that includes segments between waypoints forming a flight path for the aircraft that includes segments between waypoints forming the flight path to a destination. The flight management system may include any suitable position and direction determination devices that are capable of providing the processor with at least an aircraft's current position, the real-time direction of the aircraft in its flight path, the waypoints along the flight path, and other important flight information (e.g., elevation, pitch, airspeed, altitude, attitude, etc.).

Flight plan information of aircraft identification (i.e., the call sign) (e.g., KLM522) can be considered contextual information. As each tower clearance (an exemplary request for pilot action) starts with the call sign for the aircraft to which the request is directed, the speech transcription module does not need to consider other call signs while performing the speech-to- text conversion. Such contextual data is critical to avoid call sign confusion when more than one aircraft is flying close to each other and share similar call signs (e.g., KLM522 and KLM622). By using the contextual data (in this case, the call sign) from the flight management system, the pilot can substantially ensure (i.e., validate) that the transcribed text of the request for pilot action he/she is reading back pertains to the aircraft he/she is flying. Similarly, by using the contextual data in the speech-to-text conversion, the pilot can substantially ensure (i.e., validate) that the text displayed to him or her is an accurate transcription of the request for pilot action.

In general, the user interface (FIG. 1) is coupled to the flight management system 16 and is located within the cockpit of the aircraft. The pilot and flight management system user are cooperatively configured to allow a user (e.g., a pilot or other flight crewmember) to interact with the flight management system 16 and other components of system 10 as known in the art.

Processor 20 may be any type of computer, computer system, microprocessor, collection of logic devices, or any other analog or digital circuitry that is configured to calculate, and/or to perform algorithms, and/or to execute software applications, and/or to execute sub-routines, and/or to be loaded with and to execute any type of computer program. Processor 20 may comprise a single processor or a plurality of processors acting in concert. In some embodiments, processor 20 may be dedicated for use exclusively with system 10 while in other embodiments processor 20 may be shared with other systems on board the aircraft. In still other embodiments, processor 20 may be integrated into any of the other components of system 10. For example, in some embodiments, processor 20 may be a component of the speech transcription module.

Processor 20 is communicatively coupled to the speech transcription module 14 and the data storage device 22 and is operatively coupled to display device 24. Such communicative and operative connections may be effected through the use of any suitable means of transmission including both wired and wireless connections. For example, each component may be physically connected to processor 20 via a coaxial cable or via any other type of wire connection effective to convey electronic signals. In other embodiments, each component may be communicatively connected to processor 20 across a bus or other similar communication corridor. Examples of suitable wireless connections include, but are not limited to, a Bluetooth connection, a Wi-Fi connection, an infrared connection or the like.

Being communicatively and/or operatively coupled with the speech transcription module 14, data storage device 22, and display device 24 provides processor 20 with a pathway for the receipt and transmission of signals, commands, request for pilot actions, and interrogations to and from and each of the other components. Processor is configured (i.e., being loaded with and being capable of executing suitable computer code, software and/or applications) to interact with and to coordinate with each of the other components of system 10 for the purpose of reducing and detecting read-back and hear-back errors as hereinafter described.

The processor accesses or includes the data storage device 22 containing a database 30 with data relating to the dialog between the transmitting station and the receiving station (i.e., the inbound and outbound voice communications). The data storage device 22 may be a memory device (e.g., non-volatile memory, disk, drive, tape, optical storage device, mass storage device, etc.) that stores the data in the form of digital signals relating to the inbound and outbound voice communications. The digital signals represent such information as the call sign of the aircraft, the source of the inbound voice communication (e.g., ATC, pilot), the parameter that is the subject of the request for pilot action (e.g., altitude, heading, etc.), the parameter value (e.g., 180°, 10000 feet), etc. The data storage device may also include stored information on standard instrument departures (SIDs), standard terminal arrival routes (STARs), airport surface layout (aerodrome mapping database), Notices to Airmen (NOTAM), ETC. This stored information is known and helps build the concise transcription vocabulary for use by the speech transcription module 14. The stored information also aids in a reliable transcription, reducing the number of iterative messages in a dialog and increasing the effectiveness of the communications between the transmitting and receiving stations.

Generally, the processor 20 receives and/or retrieves avionics, navigation, and flight management information (e.g., from the flight management system or communications system), and information relating to the inbound and outbound communications (e.g., from the speech transcription module and from the data storage device). The processor is configured to display the transcribed text of the inbound voice communication to the receiving station to aid in the read-back by the receiving station. The processor is also configured to display the transcribed text of the outbound voice communication to the transmitting station to aid in the hear-back by the transmitting station and to display the transcribed text of the inbound voice reply. The processor 20 is also configured to compare the text of the inbound voice communication (i.e., the request for pilot action) and the text of the outbound voice communication (i.e., the read-back) of the dialog and determine if there is a material discrepancy between them. Processor is also configured to compare the text of the inbound voice reply and the text of the outbound voice communication and determine if they are consistent, as hereinafter described. The discrepancy may also be detected by the transmitting station during hear-back. Processor is also configured to output a discrepancy alert if, as a result of the comparison, a determination is made that there is a material difference between the text of the inbound voice communication (the request for pilot action) and the text of the outbound voice communication (the read-back). For example, if the ATCO communicates a request for pilot action for the pilot to head 1000° and the pilot reads back a heading of 1020°, the processor outputs a discrepancy alert because there is a material difference between the texts of the inbound and outbound voice communications. As used herein, the term "material difference" and "material discrepancy" refers to a difference in the material words in the transcribed text. The material words may relate to the call sign, the parameter, and/or the parameter value between the request for pilot action and the read-back. The parameter and the parameter value collectively define the "requested information." The term "parameter" refers to a heading, altitude, etc. A material difference or discrepancy between the inbound and outbound voice communications is a read-back error.

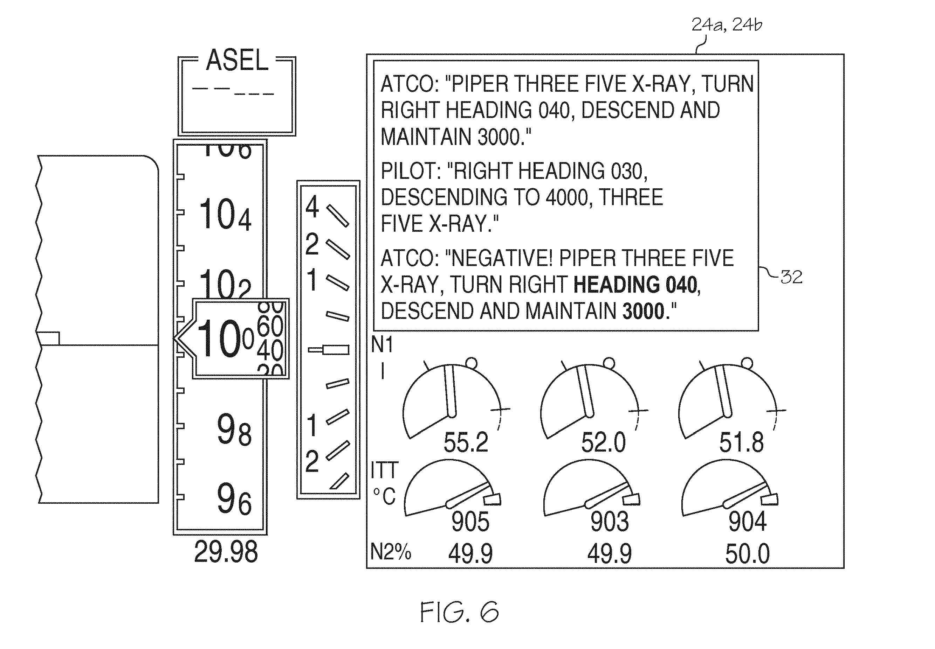

The discrepancy alert outputted because of a material difference between the read-back and the request for pilot action may be, for example, a visual discrepancy alert, an aural discrepancy alert, a tactile discrepancy alert, and combinations thereof. It should be understood that the exemplary techniques for outputting the discrepancy alert described above are exemplary and do not comprise an exhaustive list of techniques that may be employed by processor to output the discrepancy alert(s). The visual discrepancy alert comprises displaying the text of the inbound voice communications and the text of the outbound voice communication on a display screen of the display device with the material discrepancy in the text of the inbound voice reply visually highlighted (e.g., FIG. 6).

Processor is also configured to output a discrepancy alert if, as a result of the comparison between the text of the inbound voice reply and the text of the outbound voice communication, a determination is made that there is an inconsistency between the text of the inbound voice reply and the text of the outbound voice communication (the read-back), as hereinafter described.

The processor may function as a graphics display generator to generate display commands based on algorithms or other machine request for pilot actions stored in the processor or in separate memory components. The system also includes the display device 24 coupled to the processor. The display device may include any device or apparatus suitable for displaying flight information or other data associated with operation of the aircraft. In accordance with exemplary embodiments, the display commands may also represent visual discrepancy and timeout alerts. The processor generates the display commands representing this data, and sends the display commands to the display device if visual alerts are to be outputted.

In accordance with an exemplary embodiment, the display device 24 at the receiving station is an aircraft flight display located within a cockpit of the aircraft (identified in FIG. 3 as display device 24a). The display device at the transmitting station is conventional (identified in FIG. 3 as display device 24b). The display devices may be implemented using any one of numerous known display devices suitable for rendering textual, graphic, and/or iconic information in a format viewable by the pilot or other flight crew member. Nonlimiting examples of such display devices include various cathode ray tube (CRT) displays, and various flat panel displays such as various types of LCD (liquid crystal display) and TFT (Thin Film Transistor) displays. The display device may additionally be implemented as a panel mounted display, a HUD (Head-Up Display) Projection, or any one of numerous known technologies. It is additionally noted that the display device may be configured as any one of numerous types of aircraft flight deck displays. For example, it may be configured as a multi-function display, a horizontal situation indicator, or a vertical situation indicator. In the depicted embodiment, however, the display device is configured as a primary flight display (PFD) for an aircraft. Additionally, display device includes the display screen 32 that is operatively connected to display device. Display screen is configured to be controlled by display device and may be used to display any type of image including, but not limited to, textual, graphics, and iconic information. In some embodiments, display device may include multiple display screens and system 10 may include multiple display devices.

For example, in the illustrated embodiment depicted in FIG. 6, processor is configured to send a command to display device 24a instructing display device to display a visual discrepancy alert on the display screen when a read-back error is detected. Display device is then configured to provide the visual discrepancy alert to the receiving station. Processor 20 is configured to visually highlight the incorrect parameter, parameter value, or both by displaying the incorrect parameter, parameter value, or both with brighter color, intensity, special effects (e.g., flashing, underlining, etc.), special characters, or opacity different from the other information on the display screen, or using any other technique that would alert the pilot or other flight crew member that the call sign, parameter, and/or parameter value in the outbound communication was incomplete or incorrect. For example, the text of the read-back errors is in bold in FIG. 6. It should be understood that the exemplary techniques for visually highlighting the mis-matched text described above are exemplary and do not comprise an exhaustive list of techniques that may be employed by processor to provide the visual discrepancy alert.

While an aircraft flight display located within a cockpit of the aircraft is described as the exemplary display device, it is to be understood that the display device may be a personal electronic device such as an iPad® tablet, or the like that is accessible to the receiving station. Alternatively or additionally, the speech transcription and/or comparing steps may be performed in the cloud.

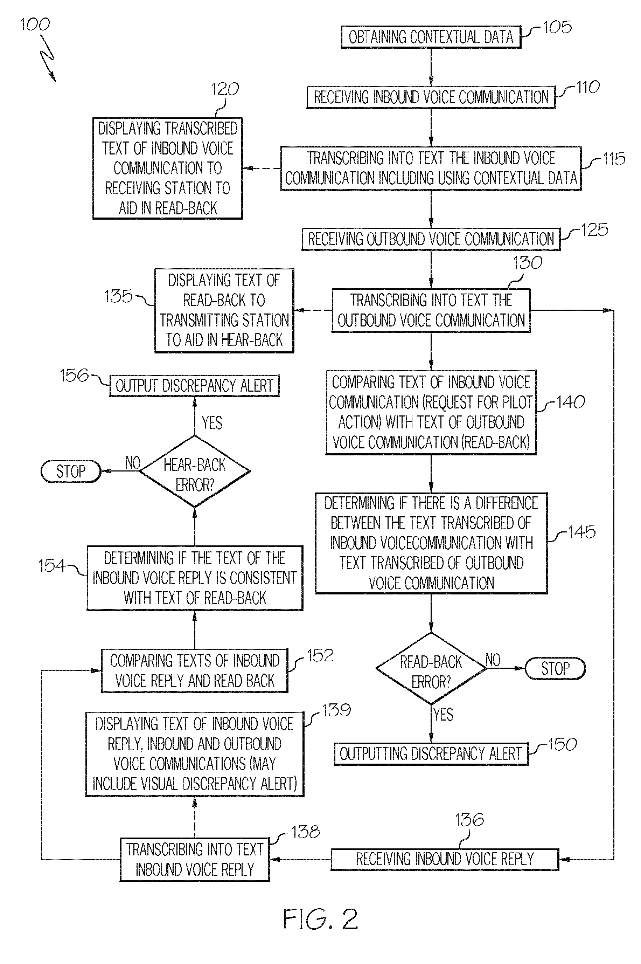

FIG. 2 is a flow diagram of a computer-implemented method 100 for reducing and detecting read-back and hear-back errors in accordance with exemplary embodiments of the present invention. FIG. 3 is a simplified schematic flow diagram of the method of FIG. 2. In an exemplary embodiment, the method 100 for reducing and detecting read-back and hear-back errors begins by obtaining contextual data about a current context of the aircraft (step 105). As noted previously, the contextual data may be obtained from the FMS 16 and/or data storage device 22 (FIG. 1).

Method 100 for reducing and detecting read-back and hear-back errors continues by receiving an inbound voice communication from a transmitting station (i.e., a request for pilot action) relating to a particular transaction (step 110). For example, in an inbound voice communication over the radio, an ATCO may state "(call sign), Heading 1000°".

Method 100 for reducing and detecting read-back and hear-back errors continues by transcribing into text the inbound voice communication (step 110). The inbound voice communication may be transcribed into text using the speech transcription module 14. The speech transcription module is used to generate or produce digital data derived from the voice communications. The transcribing step 110 further comprises using the contextual data to validate the transcription.

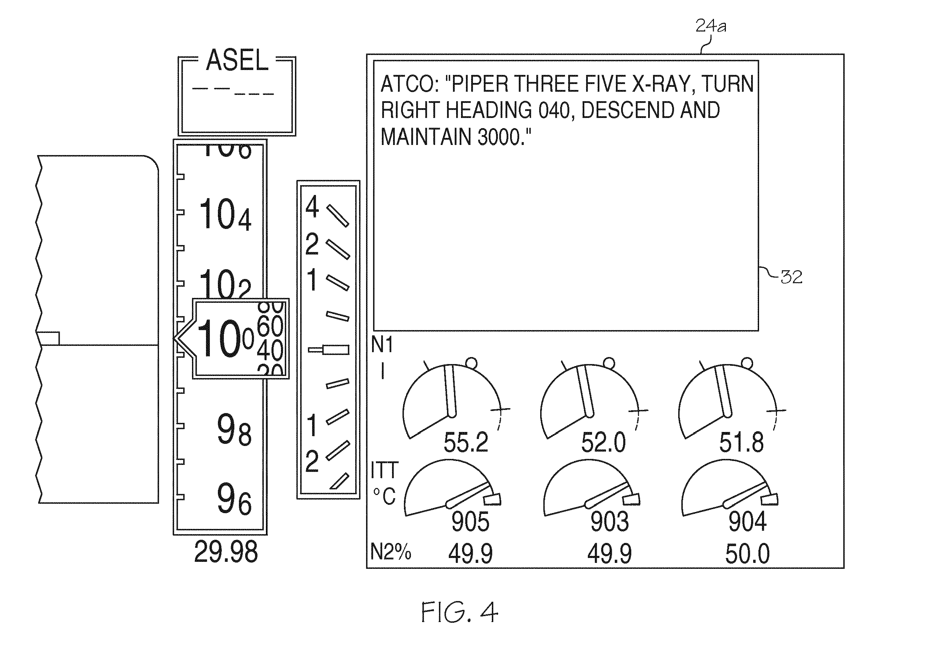

Method 100 for reducing and detecting read-back and hear-back errors continues by displaying the transcribed text of the inbound voice communication (i.e., the request for pilot action) to the receiving station to assist the receiving station with the read-back (step 120). FIG. 4 depicts an exemplary display screen 32 of an exemplary display device 24a (FIG. 3) at a receiving station with the transcribed text of an inbound voice communication (i.e., a request for pilot action) to assist the receiving station with the read-back. The display device 24a may be a cockpit display device such as a primary flight display or an external device such as an IPad® tablet or the like accessible to the pilot or crewmember.

Method 100 for reducing and detecting read-back and hear-back errors continues by receiving an outbound voice communication from a receiving station (the read-back of the request for pilot action) relating to the particular transaction (step 125). Using the above example, the pilot may acknowledge the request for pilot action by pushing the push-to-talk (PTT) switch and reading back, in the outbound voice communication over the radio, "call sign. Heading 1000°. Wilco." Pressing the PTT, or any other button or triggering device, triggers the communication system to begin receiving the inbound and outbound voice communications. The PTT is released when the voice communication ends.

Method 100 for reducing and detecting read-back and hear-back errors continues by transcribing into text the outbound voice communication (step 130) (i.e., the read-back). The outbound voice communication may be transcribed into text using the speech transcription module 14. The transcribing step 130 may further comprise using the contextual data to validate the transcription as previously described.

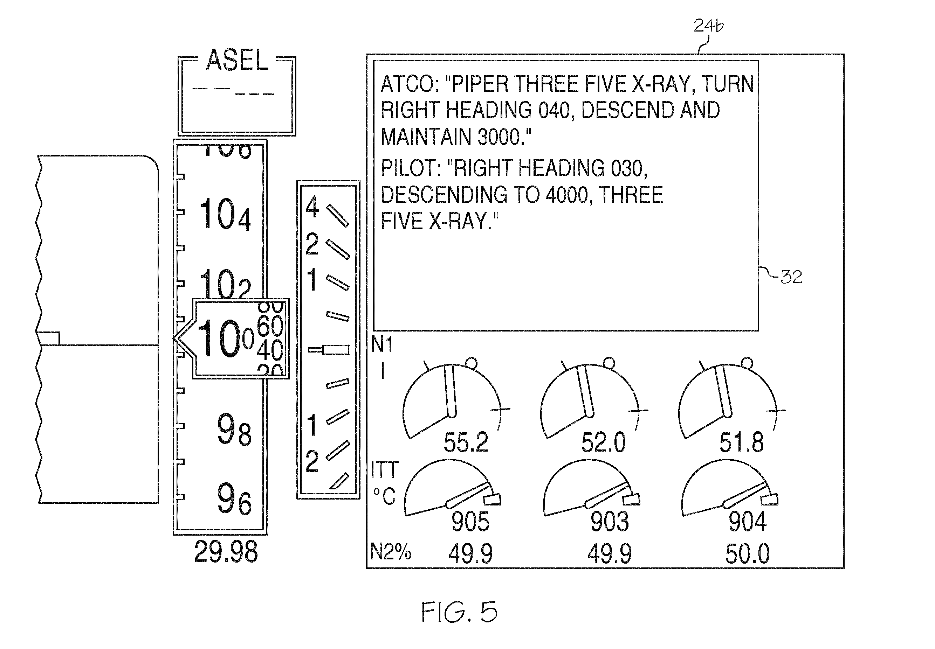

Method 100 for reducing and detecting read-back and hear-back errors continues by displaying the transcribed text of the outbound voice communication (i.e., the read-back) to the transmitting station to assist the transmitting station with the "hear-back" (step 135). FIG. 5 depicts an exemplary display screen 32 of an exemplary display device 24b (FIG. 3) at a transmitting station with the transcribed text of the outbound voice communication (i.e., the read-back). As depicted in FIG. 5, the transcribed text of the inbound voice communication (the request for pilot action) may be displayed along with the transcribed text of the read-back. Hear-back errors are thereby reduced. In addition, under ideal circumstances, any discrepancy between the request for pilot action (inbound voice communication) and the acknowledgment (read-back) in the outbound voice communication would immediately be detected by the transmitting station by visually comparing the text of the inbound communication and the outbound communication displayed on the display screen of display device 24b as depicted in FIG. 5. If a material discrepancy exists between the request for pilot action and the read-back, the read-back is determined to be in error, i.e., a material discrepancy indicates a read-back error. The discrepancy may relate to an incomplete read-back, an incorrect read-back, or both. A "material" discrepancy may relate to the call sign, the parameter, the parameter value, or combinations thereof. In an embodiment, a timeout alert may be outputted if the inbound voice reply to the read-back is not transmitted within a predetermined time interval after the read-back.

Method 100 for reducing and detecting read-back and hear-back errors continues by receiving from the transmitting station an inbound voice reply to the read-back (step 136). The inbound voice reply may either indicate that the read-back was correct (e.g., Dialog (1) in the Background section) or that there is a read-back error (e.g., Dialog (2) in the Background section).

Method 100 for reducing and detecting read-back and hear-back errors continues by transcribing into text the inbound voice reply to the read-back (step 138). The inbound voice reply is transcribed into text by the speech transcription module. The transcribing step 138 may further comprise using the contextual data to validate the transcription.

Method 100 for reducing and detecting read-back and hear-back errors continues by displaying to at least the receiving station the transcribed text of the inbound voice reply (step 139). FIG. 6 depicts an exemplary display screen 32 of the exemplary display device 24a/24b (FIG. 3) with transcribed text of an exemplary inbound voice reply along with the transcribed text of the inbound voice communication (the request for pilot action) and the outbound voice communication (the read-back). The transcribed texts may also be displayed to the transmitting station. Again, under ideal circumstances, any discrepancy between the request for pilot action (inbound voice communication) and the acknowledgment (read-back) in the outbound voice communication (i.e., a read-back error) and/or a hear-back error would immediately be detected by the transmitting station, the receiving station, or both by visually comparing the text of the inbound voice communication, the text of the outbound voice communication, and the text of the inbound voice reply displayed on the display screen of display device 24a/24b as depicted in FIG. 6.

Referring again to FIG. 2, according to the present invention , the system 10 will automatically detect the material discrepancy (i.e., the read-back error), if any, between the request for pilot action and the read-back as hereinafter described. In this regard, method 100 for reducing and detecting read-back and hear-back errors continues by comparing the text of the inbound voice communication (the request for pilot action) with the text of the outbound voice communication (the read-back) (step 140) and determining if a material discrepancy exists between the request for pilot action and the read-back (step 145). As noted previously, the processor is configured to compare the text of the inbound voice communication (i.e., the request for pilot action) and the text of the outbound voice communication (i.e., the read-back) of the dialog and determine if there is a material discrepancy between them. Steps 140 and 145 may be performed prior to, simultaneously with, or after any of previously described steps 135, 136, 138, and/or 139.

Method 100 for reducing and detecting read-back and hear-back errors continues by outputting a discrepancy alert if the comparing and determining steps 140 and 145 determine there is a read-back error (i.e., a material discrepancy between the text of the inbound voice communication (i.e., the request for pilot action) and the text of the outbound communication (i.e., the read-back) (step 150). The discrepancy alert may be a visual alert, a visual and audible alert, or both. The visual discrepancy alert may be provided on the display provided in step 139. For example, the transcribed text of the inbound voice communication (the request for pilot action), the outbound voice communication (the read-back), and an inbound voice reply is displayed on display device 24b. In step 150, the discrepancy between the text of the inbound voice communication and the outbound voice communication is visually highlighted in the text of the inbound voice reply by making the erroneous text bold as further depicted in FIG. 6. It should be understood that the visually distinguishing technique depicted in FIG. 6 (making the erroneous text bold) is exemplary and does not comprise an exhaustive list of techniques that may be employed by processor to provide the visual discrepancy alert. The visual alert is such that the text (e.g., text of the call sign, parameter, or both) and/or a number (call sign number, parameter value, or both) corresponding to the material discrepancy may be displayed with special effects (e.g., flashing, underlining), special characters (e.g., question mark), brighter color, intensity, or opacity different from the other information on the display screen, or by using any other visually distinguishing or highlighting technique that would alert the receiving station or the receiving and transmitting stations to the read-back error, thereby permitting its detection. An audible alert may be outputted by known methods and systems. It should be appreciated that the display screen as depicted in FIGS. 4 through 6 represents the state of a dynamic display frozen at one particular time, and that the display screen may be continuously refreshed during operation of the aircraft to reflect a particular dialog. While the visual discrepancy alert is described in the text of the inbound voice reply, it is to be understood that the discrepancy may be visually highlighted in the erroneous text of the outbound communication.

When a read-back error is detected as described above, steps 125, 130, 140, and 145 may be repeated until the read-back is complete and correct such that no read-back error is detected, i.e., the receiving station can read back the request for pilot action again. The processor compares the corrective read-back with the request for pilot action in the inbound voice communication to determine if there is still a material difference between the corrective read-back and the request for pilot action. If there is still a material difference in the request for pilot action and the corrective read-back, the processor outputs another discrepancy alert, indicating that the read-back is still incorrect or incomplete.

The system also automatically detects hear-back errors (i.e., an incomplete or incorrect inbound voice reply). As noted above, the failure to hear and/or misinterpretation of a pilot read-back results in a hear-back error. In this regard, the transcribed text of the inbound voice reply is compared with the text of the outbound voice communication (i.e., the read-back) (step 152). For example, referring again to FIG. 6, the text of the ATCO inbound voice reply indicating a read-back error is different from the text of the outbound communication (because by definition a read-back error exists because there is a difference). More particularly, the parameter values are different between the read-back and the inbound voice reply. Therefore, in this example, the indicated read-back error relates to the erroneous parameter values. To detect a hear-back error, the system determines if the text of the inbound voice reply is "consistent" with the read-back (step 154). An inconsistency indicates a hear-back error, in which case a discrepancy alert may be outputted (step 156). The discrepancy alert outputted in step 156 may be the same or different from the discrepancy alert outputted in step 150. For example, referring again to FIG. 6, if the inbound voice reply and transcription thereof provided "Piper Three Five X-ray, Correct", the inbound voice reply and transcription thereof is inconsistent with the read-back error, and thus there is a hear-back error, resulting in a discrepancy alert. In the same regard, if no read-back error was detected and the inbound voice reply and transcription incorrectly indicates a read-back error, there is a hear-back error and the discrepancy alert will be outputted. As noted above, a timeout alert may be outputted if the inbound voice reply is not received within a predetermined time interval after the outbound voice communication.

While a system and method for reducing and detecting read-back and hear-back errors have been described for use when a transmitting station communicates a request for pilot action, the receiving station acknowledges the request by read-back, and the transmitting station listens to the read-back (i.e., hear-back), it is to be understood that the system and method may be adopted for use when the receiving station initiates the dialog by an outbound voice communication that must be acknowledged in some manner by the transmitting station (i.e., by a "transmitting station read-back") followed by a "receiving station hear-back." For example, a pilot at the receiving station has the ability to request clearances and information, to report information, and to declare/rescind an emergency among other things. In these examples, the transmitting station read-back includes reading back the requested clearance and information, the reported information, the declaration/recission of the emergency, or combinations thereof. The receiving station hear-back follows. The comparing and outputting steps remain the same as described above.

The present invention is further described in detail through the following example. However, the scope of the present invention is by no means restricted or limited by the example, which only has an illustrative purpose.

### EXAMPLE

The pilot or crewmember receives an inbound voice communication from, for example, an air traffic controller. For example, the pilot or crewmember may receive a request for pilot action such as: "Descend Altitude 7000 feet." The pilot or crewmember may press the PTT button and read-back to ATC "Descend altitude 7000 feet" (the acknowledgment). The read-back is the outbound voice communication. In this example, the speech transcription module transcribes the words "descend", "altitude", and "fleet". The ATCO then listens to the read-back (the "hear-back). The processor compares the text of the inbound voice communication (the request for pilot action) (i.e., "Descend Altitude 7000 feet") with the text of the outbound voice communication (the read-back) ("Descend altitude 7000 feet) and determines if there is a discrepancy between the request for pilot action and the read-back. As there is no difference (discrepancy) in this example, no discrepancy alert is outputted. If there is a material difference in the request for pilot action and the read-back (e.g., "Ascend" instead of "Descend", "Heading" instead of "Altitude", and/or the incorrect value), the processor outputs a discrepancy alert, indicating a read-back error. The pilot can then try to correct the read-back (a "corrective read-back"). The processor compares the corrective read-back with the request for pilot action in the inbound voice communication to determine if there is still a material difference between the corrective read-back and the request for pilot action. If there is still a material difference in the request for pilot action and the corrective read-back, the processor outputs another discrepancy alert, indicating that the read-back is still incorrect or incomplete. The comparing and outputting steps may then be repeated until there is no detected read-back error.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

From the foregoing, it is to be appreciated that the methods and systems according to exemplary embodiments as herein described reduce and detect read-back and hear-back errors, thereby resulting in increased flight safety and efficiency through more effective communications. In addition, the number of messages in a dialog may be reduced, thereby increasing throughput of airport air traffic.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method (100) for reducing and detecting read-back and hear-back errors in an aircraft, the method comprising the steps of:
obtaining contextual data about a current context of the aircraft (105);
transcribing into text a dialog comprising an inbound voice communication and an outbound voice communication, the inbound voice communication comprises a request for pilot action from a transmitting station and the outbound voice communication comprises a read-back of the request for pilot action from the aircraft, the transcribing step further comprising using the contextual data to validate the transcription (115/130);
comparing the text of the inbound voice communication with the text of the outbound voice communication (140) and determining if a discrepancy exists between the respective texts (145);
displaying on a display device (24a) in the aircraft the text of the inbound voice communication (120);
displaying on a further display device (24b) at the transmitting station the text of the outbound voice communication (135); and
outputting a discrepancy alert if the discrepancy is determined to exist, thereby indicating a read-back error (150).

2. The method of Claim 1, wherein the step (105) of obtaining contextual data comprises obtaining the contextual data from a flight management system, a database, or both in an aircraft system.

3. The method of Claim 1, wherein the inbound voice communication further comprises an inbound voice reply to the read-back, and the method further comprises the steps of:
transcribing into text the inbound voice reply (138); and
displaying the text of the inbound voice reply (139) on the display device (24a) in the aircraft.

4. The method of Claim 1, wherein the step (120) of displaying to the aircraft the text of the inbound voice communication is performed prior to transcribing the outbound voice communication into text.

5. The method of Claim 1, wherein the step (135) of displaying to the transmitting station the text of the outbound voice communication is performed after the step (120) of displaying to the aircraft the text of the inbound communication.

6. The method of Claim 1, wherein the step (150) of outputting a discrepancy alert comprises outputting a visual discrepancy alert, an aural discrepancy alert, a tactile discrepancy alert, or combinations thereof.

7. The method of Claim 6, wherein the step (150) of outputting a visual discrepancy alert comprises displaying the text of the inbound voice communication, the text of the outbound voice communication, and the text of the inbound voice reply on the display device (24a) in the aircraft with the discrepancy visually highlighted in the text of the inbound voice reply.

8. The method of Claim 3, further comprising a step of outputting a timeout alert if the inbound voice reply to the read-back is not transmitted within a predetermined time interval after the read-back.

9. The method of Claim 1, further comprising a step of repeating the transcribing into text the outbound voice communication step and the comparing step until the read-back error is corrected.

10. A system (10) for reducing and detecting read-back and hear-back errors, the system comprising:
a communication system (12) configured to support an inbound voice communication from a transmitting station relating to a request for pilot action and an outbound voice communication from a receiving station, the outbound voice communication comprising a read-back of the request for pilot action;
a flight management system (16) that includes or accesses contextual data and is configured to provide the contextual data to a speech transcription module;
a data storage device (22) containing a database with stored contextual data;
a speech transcription module (14) configured to transcribe into text the inbound and outbound voice communications and further configured to use contextual data to validate the transcriptions;
a processor (20) coupled to the speech transcription module and the data storage device to receive digital data and the contextual data and configured, in response thereto, to:
compare the text of the inbound voice communication with the text of the outbound voice communication and determine if a discrepancy exists between the respective texts; and
output a discrepancy alert if the discrepancy exists;
a display device (24a) at the receiving station that displays the transcribed text of the inbound voice communication and that displays transcribed text of an inbound voice reply from the transmitting station;
a further display device (24b) at the transmitting station that displays the text of the outbound voice communication,
wherein based on the determination that the discrepancy exists, the discrepancy alert is displayed by visually highlighting the determined discrepancy in the transcribed text of the inbound voice reply.

## Patentansprüche

1. Verfahren (100) zur Verringerung und Detektion von Readback- (Rücklese-) und Hearback- (Rückhör-) Fehlern in einem Flugzeug, wobei das Verfahren die folgenden Schritte umfasst:
Erhalten von kontextbezogenen Daten über einen aktuellen Kontext des Flugzeugs (105);
Umschreiben eines Dialogs, der eine eingehende Sprachmitteilung und eine ausgehende Sprachmitteilung umfasst, in einen Text, wobei die eingehende Sprachmitteilung eine Handlungsanweisung an einen Piloten von einer Senderstation umfasst und die ausgehende Sprachmitteilung ein Rücklesen (Readback) der Handlungsanweisung an den Piloten von dem Flugzeug umfasst, wobei der Schritt des Umschreibens ferner das Verwenden der kontextbezogenen Daten umfasst, um das Umschreiben (115/130) zu validieren;
Vergleichen des Textes der eingehenden Sprachmitteilung mit dem Text der ausgehenden Sprachmitteilung (140) und Bestimmen, ob eine Abweichung zwischen den jeweiligen Texten (145) vorliegt;
Anzeigen des Textes der eingehenden Sprachmitteilung (120) auf einer Anzeigevorrichtung (24a) im Flugzeug;
Anzeigen des Textes der ausgehenden Sprachmitteilung (135) auf einer weiteren Anzeigevorrichtung (24b) in der Senderstation; und
Ausgeben einer Abweichungswarnung, falls das Vorliegen einer Abweichung festgestellt wird, um dadurch einen Readback-Fehler (150) anzuzeigen.

2. Verfahren nach Anspruch 1, wobei der Schritt (105) des Erhaltens von kontextbezogenen Daten das Erhalten von kontextbezogenen Daten von einem Flugmanagementsystem, einer Datenbank oder beidem in einem Flugzeugsystem umfasst.

3. Verfahren nach Anspruch 1, wobei die eingehende Sprachmitteilung ferner eine eingehende Sprachantwort auf das Rücklesen (Readback) umfasst, und das Verfahren ferner die folgenden Schritte umfasst:
Umschreiben der eingehenden Sprachantwort (138) in einen Text; und
Anzeigen des Textes der eingehenden Sprachantwort (139) auf der Anzeigevorrichtung (24a) im Flugzeug.

4. Verfahren nach Anspruch 1, wobei der Schritt (120) des Anzeigens des Textes der eingehenden Sprachmitteilung im Flugzeug vor dem Umschreiben der ausgehenden Sprachmitteilung in einen Text ausgeführt wird.

5. Verfahren nach Anspruch 1, wobei der Schritt (135) des Anzeigens des Textes der ausgehenden Sprachmitteilung in der Senderstation nach dem Schritt (120) des Anzeigens des Textes der eingehenden Mitteilung im Flugzeug ausgeführt wird.

6. Verfahren nach Anspruch 1, wobei der Schritt (150) des Ausgebens einer Abweichungswarnung das Ausgeben einer sichtbaren Abweichungswarnung, einer hörbaren Abweichungswarnung, einer spürbaren Abweichungswarnung oder Kombinationen davon umfasst.

7. Verfahren nach Anspruch 6, wobei der Schritt (150) des Ausgebens einer sichtbaren Abweichungswarnung das Anzeigen des Textes der eingehenden Sprachmitteilung, des Textes der ausgehenden Sprachmitteilung und des Textes der eingehenden Sprachantwort auf der Anzeigevorrichtung (24a) im Flugzeug umfasst, wobei die Abweichung im Text der eingehenden Sprachantwort sichtbar hervorgehoben wird.

8. Verfahren nach Anspruch 3, das ferner einen Schritt des Ausgebens einer Zeitüberschreitungswarnung umfasst, falls die eingehende Sprachantwort auf das Rücklesen (Readback) nicht innerhalb eines vorgegebenen Zeitintervalls nach dem Rücklesen gesendet wird.

9. Verfahren nach Anspruch 1, das ferner einen Schritt des Wiederholens des Umschreibens der ausgehenden Sprachmitteilung in einen Text und des Schrittes des Vergleichens umfasst, bis der Readback-Fehler korrigiert wird.

10. System (10) zur Verringerung und Detektion von Readback- (Rücklese-) und Hearback- (Rückhör-) Fehlern, wobei das System umfasst:
ein Kommunikationssystem (12), das dafür ausgelegt ist, eine eingehende Sprachmitteilung von einer Senderstation betreffend eine Handlungsanweisung an einen Piloten und eine ausgehende Sprachmitteilung von einer Empfängerstation zu unterstützen, wobei die ausgehende Sprachmitteilung ein Rücklesen (Readback) der Handlungsanweisung an den Piloten umfasst;
ein Flugmanagementsystem (16), das kontextbezogene Daten umfasst oder darauf Zugriff hat und dafür ausgelegt ist, die kontextbezogenen Daten einem Sprachumschreibungsmodul zuzuführen;
eine Datenspeichervorrichtung (22), die eine Datenbank mit gespeicherten kontextbezogenen Daten umfasst;
ein Sprachumschreibungsmodul (14), das dafür ausgelegt ist, die eingehenden und ausgehenden Sprachmitteilungen in Text umzuschreiben, und ferner dafür ausgelegt ist, kontextbezogene Daten zum Validieren der Umschreibungen zu verwenden;
einen Prozessor (20), der mit dem Sprachumschreibungsmodul und der Datenspeichervorrichtung gekoppelt ist, um digitale Daten und die kontextbezogenen Daten zu empfangen, und dafür ausgelegt ist, in Reaktion darauf:
den Text der eingehenden Sprachmitteilung mit dem Text der ausgehenden Sprachmitteilung zu vergleichen und festzustellen, ob eine Abweichung zwischen den jeweiligen Texten vorliegt; und
eine Abweichungswarnung auszugeben, falls eine Abweichung vorliegt;
eine Anzeigevorrichtung (24a) in der Empfängerstation, die den umgeschriebenen Text der eingehenden Sprachmitteilung anzeigt und den umgeschriebenen Text einer eingehenden Sprachantwort von der Senderstation anzeigt;
eine weitere Anzeigevorrichtung (24b) in der Senderstation, die den Text der ausgehenden Sprachmitteilung anzeigt,
wobei aufgrund der Feststellung, dass eine Abweichung vorliegt, die Abweichungswarnung angezeigt wird, indem die festgestellte Abweichung in dem umgeschriebenen Text der eingehenden Sprachantwort sichtbar hervorgehoben wird.

## Revendications

1. Procédé (100) pour réduire et détecter des erreurs de relecture et de réécoute dans un aéronef, lequel procédé comprend les étapes consistant à :
- obtenir des données contextuelles concernant un contexte courant de l'aéronef (105) ;
- transcrire en texte un dialogue comprenant une communication vocale entrante et une communication vocale sortante, la communication vocale entrante comprenant une demande d'action du pilote depuis une station de transmission et la communication vocale sortante comprenant une relecture de la demande d'action du pilote depuis l'aéronef, l'étape de transcription consistant en outre à utiliser les données contextuelles pour valider la transcription (115/130) ;
- comparer le texte de la communication vocale entrante au texte de la communication vocale sortante (140) et déterminer s'il y a une différence entre les textes respectifs (145) ;
- afficher sur un dispositif d'affichage (24a) dans l'aéronef le texte de la communication vocale entrante (120) ;
- afficher sur un autre dispositif d'affichage (24b) au niveau de la station de transmission le texte de la communication vocale sortante (135) ; et
- émettre une alerte de différence une fois déterminé qu'il existe une différence, indiquant ainsi une erreur de relecture (150).

2. Procédé selon la revendication 1, dans lequel l'étape (105) d'obtention de données contextuelles consiste à obtenir des données contextuelles depuis un système de gestion de vol, une base de données ou les deux dans un système d'aéronef.

3. Procédé selon la revendication 1, dans lequel la communication vocale entrante comprend en outre une communication vocale entrante à la relecture, le procédé comprenant en outre les étapes consistant à :
- transcrire en texte la réponse vocale entrante (138) ; et
- afficher le texte de la réponse vocale entrante (139) sur le dispositif d'affichage (24a) dans l'aéronef.

4. Procédé selon la revendication 1, dans lequel l'étape (120) d'affichage dans l'aéronef du texte de la communication vocale entrante est effectuée avant de transcrire la communication vocale sortante en texte.

5. Procédé selon la revendication 1, dans lequel l'étape (135) d'affichage vers la station de transmission du texte de la communication vocale sortante est effectuée après l'étape (120) d'affichage dans l'aéronef du texte de la communication entrante.

6. Procédé selon la revendication 1, dans lequel l'étape (150) d'émission d'alerte de différence consiste à émettre une alerte de différence visuelle, une alerte de différence orale, une alerte de différence tactile et des combinaisons de ces dernières.

7. Procédé selon la revendication 6, dans lequel l'étape (150) d'émission d'alerte de différence visuelle consiste à afficher le texte de la communication vocale entrante, le texte de la communication vocale sortante et le texte de la réponse vocale entrante sur le dispositif d'affichage (24a) dans l'aéronef avec une différence visuellement mise en valeur dans le texte de la réponse vocale entrante.

8. Procédé selon la revendication 3, comprenant en outre une étape consistant à émettre une alerte de temps écoulé si la réponse vocale entrante à la relecture n'est pas transmise dans un intervalle de temps prédéterminé après la relecture.

9. Procédé selon la revendication 1, comprenant en outre une étape consistant à répéter la transcription en texte de l'étape de communication vocale sortante et l'étape de comparaison jusqu'à ce que l'erreur de relecture soit corrigée.

10. Système (10) pour réduire et détecter des erreurs de relecture et de réécoute dans un aéronef, lequel système comprend :
- un système de communication (12) conçu pour prendre en charge une communication vocale entrante depuis une station de transmission concernant une demande d'action de pilote et une communication vocale sortante depuis une station de réception, la communication vocale sortante comprenant une relecture de la demande d'action de pilote ;
- un système de gestion de vol (16) qui comprend ou accède à des données contextuelles et est conçu pour fournir les données contextuelles à un module de transcription de parole ;
- un dispositif de stockage de données (22) contenant une base de données dans laquelle sont stockées des données contextuelles ;
- un module de transcription de parole (14) conçu pour transcrire en texte les communications vocales entrante et sortante et conçu pour utiliser des données contextuelles afin de valider les transcriptions ;
- un processeur (20) couplé au module de transcription de parole et au dispositif de stockage de données afin de recevoir des données numériques et les données contextuelles, et conçu pour, en réponse :
- comparer le texte de la communication vocale entrante au texte de la communication vocale sortante et déterminer s'il y a une différence entre les textes respectifs ; et
- émettre une alerte de différence une fois déterminé qu'il existe une différence ;
- un dispositif d'affichage (24a) au niveau de la station de réception qui affiche le texte transcrit de la communication vocale entrante et qui affiche le texte transcrit d'une réponse vocale entrante depuis la station de transmission ;
- un autre dispositif d'affichage (24b) au niveau de la station de transmission qui affiche le texte de la communication vocale sortante ;
dans lequel, s'il est déterminé qu'une différence existe, l'alerte de différence est affichée en mettant en valeur visuellement la différence déterminée dans le texte transcrit de la réponse vocale entrante.
